# EUROPÄISCHE PATENTANMELDUNG

(11) **EP 4 534 822 A1**
(43) Veröffentlichungstag der Anmeldung: **09.04.2025**
(21) Anmeldenummer: 24203304.1
(22) Anmeldetag: 27.09.2024
(51) Int. Cl.: F02C 6/08, F02C 9/18, F02K 3/075

(54) **STRÖMUNGSKANALVORRICHTUNG**

(30) Priorität: 05.10.2023 DE 102023127182
(71) Anmelder: MTU Aero Engines AG, 80995 München (DE)
(72) Erfinder: Busch, Nils, 80995 München (DE); Hartung, Andreas, 80995 München (DE); Mechler, Magnus, 80995 München (DE); Schrade, Marcus, 80995 München (DE); Weltrowski, Thomas, 80995 München (DE); Wagner, Christian, 80995 München (DE)

(57) **Zusammenfassung**

Die Erfindung betrifft eine Strömungskanalvorrichtung (10) eines Flugtriebwerks (1) zur Vereinigung zweier unterschiedlicher Gasströme, insbesondere eines Zapfluftstroms und eines Nebenkanalstroms, umfassend eine Mischvorrichtung (20) mit einem ersten Zulaufkanal (11), einem zweiten Zulaufkanal (12), einem Abströmkanal (13), und einem Mischbereich (21), wobei die Mischvorrichtung (20) in einem geschlossenen Zustand (C) die beiden unterschiedlichen Gasströme trennt und in einem geöffneten Zustand (O) die beiden Gasströme mischt, wobei die Mischvorrichtung (20) einen in dem Mischbereich (21) beweglich angeordneten Ventilkörper (30) aufweist. Eine Strömungskanalvorrichtung, die eine höhere Lebensdauer aufweist, wird erfindungsgemäß dadurch geschaffen, dass der Ventilkörper (30) ein Reibdämpfungssystem aufweist.

## Beschreibung

Die Erfindung betrifft eine Strömungskanalvorrichtung eines Flugtriebwerks zur Vereinigung zweier unterschiedlicher Gasströme, insbesondere eines Zapfluftstroms und eines Nebenkanalstroms, umfassend eine Mischvorrichtung mit einem ersten Zulaufkanal, insbesondere wobei der erste Zulaufkanal ein Zapfluftkanal ist, einem zweiten Zulaufkanal, insbesondere wobei der zweite Zulaufkanal ein Nebenstromkanal ist, und einem Abströmkanal, wobei die Mischvorrichtung in einem geschlossenen Zustand die beiden unterschiedlichen Gasströme trennt und in einem geöffneten Zustand die beiden Gasströme mischt, wobei die Mischvorrichtung einen Ventilkörper aufweist, der in dem geschlossenen Zustand in einer Trennebene zwischen dem ersten Zulaufkanal und dem zweiten Zulaufkanal angeordnet ist.

Einige Triebwerkskonzepte nutzen einen zusätzlichen, zweiten Nebenstromkanal. Luft, die durch diesen zusätzlichen Nebenstromkanal geleitet wird, wird nach dem Verdichterzwischengehäuse wieder mit dem eigentlichen Nebenstrom gemischt. Dies betrifft insbesondere Triebwerkskonzepte mit variablen Arbeitsprozess (engl. "variabel cycle engine concepts"), wobei die Triebwerke abgekürzt als VCEs (engl. "variable cycle engines") bezeichnet werden. Um den richtigen Massenstrom und weitere Parameter betriebsgerecht einzustellen, lassen sich die Flächenverhältnisse im Bereich der Mischebene durch eine Mischvorrichtung mit Ventilkörper durch axiales Verfahren des Ventilkörpers variabel einstellen. Die Mischvorrichtung kann ein sogenannter Bypass-Injektor mit variablem Bereich sein, der abgekürzt als VABI ("Variable Area Bypass Injector") bezeichnet wird.

Eine Strömungskanalvorrichtung mit einer Mischvorrichtung ist beispielsweise aus der US 5,343,697 A bekannt. Der dort gezeigte Ventilkörper ist im Wesentlichen zylindrisch ausgebildet und aus einer Trennebene in eine Mischebene verschiebbar ausgebildet. Die Verschiebung erfolgt durch in Umfangsrichtung verteilt angeordnete Verstellhebel.

Durch die Umgebungsbedingungen des VABI ergeben sich vielseitige Quellen der Schwingungsanregung, z.B. Unwuchten, aerodynamische, aeroakustische Anregungen. Zusätzlich verändern sich die Eigenfrequenzen und Eigenformen des VABI durch unterschiedliche Anlage-Steifigkeiten am Zwischengehäuse während des axialen Verfahrens, was zu weiteren möglichen anregbaren Resonanzen führt. In Summe ergeben sich erhebliche Unsicherheiten hinsichtlich der Auslegungskriterien des Bauteils, insbesondere in Bezug auf die Dauerschwingungsermüdung ("high cycle fatigue").

Es ist die Aufgabe der Erfindung eine Strömungskanalvorrichtung eines Flugtriebwerks zur Vereinigung zweier unterschiedlicher Gasströme anzugeben, deren Mischvorrichtung eine erhöhte Lebensdauer erwarten lässt.

Eine erfindungsgemäße Strömungskanalvorrichtung eines Flugtriebwerks zur Vereinigung zweier unterschiedlicher Gasströme, insbesondere eines Zapfluftstroms und eines Nebenkanalstroms, umfasst eine Mischvorrichtung mit einem ersten Zulaufkanal, insbesondere wobei der erste Zulaufkanal ein Zapfluftkanal ist, einem zweiten Zulaufkanal, insbesondere wobei der zweite Zulaufkanal ein Nebenstromkanal des Flugtriebwerks oder ein Zulaufkanal aus dem Nebenstromkanal oder ein weiterer Zapfluftkanal ist, und einem Abströmkanal, wobei die Mischvorrichtung in einem geschlossenen Zustand die beiden unterschiedlichen Gasströme trennt und in einem geöffneten Zustand die beiden Gasströme mischt, wobei die Mischvorrichtung einen in einem Mischbereich beweglich angeordneten insbesondere zylindrischen Ventilkörper aufweist.

Die Aufgabe wird von der erfindungsgemäßen Strömungskanalvorrichtung des Anspruchs 1 dadurch gelöst, dass der Ventilkörper ein Reibdämpfungssystem aufweist. Mittels des Reibdämpfungssystems kann der Ventilkörper besser Schwingungen aufnehmen, so dass die Lebensdauer der Mischvorrichtung vorteilhaft erhöht wird. Die Reibdämpfung wird durch den Ventilkörper selbst erzielt, wobei insbesondere in einem Verschlussabschnitt eine entsprechende Dämpfungsvorrichtung zur Reibdämpfung des Ventilkörpers vorgesehen ist, wie nachfolgend anhand weiterer Ausführungsformen erläutert wird.

Die vorliegende Strömungskanalvorrichtung kann zur Mischung zweier Gasströmungen von zwei Nebenstromkanälen oder von Luftströmungen insbesondere aus einem von einem Verdichter gespeisten Zapfluftsystem des Flugtriebwerks eingesetzt werden. Dabei wird dem Gesamtnebenstrom oder dem Verdichter Luft entnommen, die dann der Mischvorrichtung zugeführt wird. Der zweite Zulaufkanal kann beispielsweise von einer stromab- oder aufwärtigen weiteren Zapfluftstelle oder von einem zweiten Nebenstrom des Flugtriebwerks angeströmt werden. Der Abströmkanal kann beispielsweise ein Abschnitt des Gesamtnebenstromkanals oder ein Kanal des Zapfluftsystems des Flugtriebwerks sein. Der Ventilkörper ist insbesondere ein zylindrischer Ventilkörper, der ringförmig ausgebildet ist. Der Ventilkörper verschließt vorzugsweise in dem geschlossen Zustand einen der beiden Zulaufkanäle. In dem geschlossenen Zustand des Ventilkörpers kann der andere der beiden Zulaufkanäle bevorzugt vollständig geöffnet sein. Der Ventilkörper kann in dem geschlossenen Zustand trennend zwischen dem ersten Zulaufkanal und dem zweiten Zulaufkanal angeordnet sein. Der Ventilkörper kann in dem geöffneten Zustand mischend zwischen dem ersten Zulaufkanal und dem zweiten Zulaufkanal angeordnet sein. Der Ventilkörper wird vorzugsweise von zumindest einem, insbesondere mehreren in Umfangsrichtung verteilt angeordneten Verstellhebeln bewegt. Ergänzend zu dem zumindest einen Verstellhebel können auch einer oder mehrere Haltehebel vorgesehen sein, die in Umfangsrichtung verteilt angeordnet sind. Der Ventilkörper gleitet bei einem Öffnungsvorgang oder Schließvorgang über eine Gleitvorrichtung, die insbesondere ein oder mehrere in Umfangsrichtung verteilt angeordnete Gleitblöcke sein kann. Der Ventilkörper gleitet dabei vorzugsweise mit einem Gleitabschnitt über die Gleitvorrichtung möglichst reibungsschale.

Weitere Vorteile und Merkmale ergeben sich aus der nachfolgenden Beschreibung einiger bevorzugter Ausführungsbeispiele sowie den abhängigen Ansprüchen.

In einer vorteilhaften Ausführungsform der Strömungskanalvorrichtung kann der Ventilkörper in einem Meridianschnitt des Flugtriebwerks betrachtet entlang seiner Längserstreckung zumindest aus einer ersten Ventilschale und einer zweiten Ventilschale gebildet sein, wobei die erste Ventilschale und die zweite Ventilschale in einem in den Mischbereich ragenden, und insbesondere zur Mischung vorgesehenen, Verschlussabschnitt des Ventilkörpers aneinander anliegen. Die beiden Ventilschalen können Ventilringe oder Ventilringabschnitte sein, die insbesondere blechartig ausgebildet sind. Die Ventilschalen können eine konisch zylinderförmige Struktur mit in axialer Richtung ansteigendem Durchmesser aufweisen. Durch die strukturelle Trennung in zwei Ventilschalen und das aneinander Anliegen der beiden Ventilschalen werden Schwingungen vorteilhaft besser absorbiert, so dass auch die Prognosefähigkeit bei der Auslegung der Strömungskanalvorrichtung verbessert ist. Die Anlagefläche der beiden Ventilschalen kann insbesondere in dem Verschlussabschnitt reibungsbehaftet ausgebildet sein. Die beiden aneinander anliegenden Ventilschalen bilden durch die Anlage eine Dämpfungsvorrichtung. Der Verschlussabschnitt ist der Abschnitt des Ventilkörpers, der in den Mischbereich hineinragt und in dem geschlossenen Zustand den ersten von dem zweiten Zulaufkanal fluidisch trennt.

In einer weiteren vorteilhaften Ausführungsform der Strömungskanalvorrichtung kann vorgesehen sein, dass die erste Ventilschale und die zweite Ventilschale in einem Gleitabschnitt des Ventilkörpers miteinander formschlüssig und/oder kraftschlüssig und/oder materialschlüssig miteinander fest verbunden sind. Durch diese starre Verbindung wird in Kombination mit dem eigengedämpften Ventilkörper eine schädigende Schwingreibung zwischen Ventilkörper, Verstellhebel und einer weiter unten näher beschriebenen Gleitvorrichtung für den Ventilkörper vorteilhaft verringert.

In einer besonders vorteilhaften Ausführungsform der Strömungskanalvorrichtung kann vorgesehen sein, dass zwischen der ersten Ventilschale und der zweiten Ventilschale ein Dämpfungsmittel angeordnet ist. Ein Dämpfungsmittel kann ein elastischer Körper wie eine Passfeder sein, die in einer Passfeder-Nut-Verbindung mit den Ventilschalen verbunden ist. Ein Dämpfungsmittel kann insbesondere wie weiter unten noch näher beschrieben ein vorspannendes Zwangsmittel sein, das die beiden Ventilschalen auseinander vorspannt und so die Schwingungsabsorption erhöht. Das Zwangsmittel kann Teil einer der beiden Ventilschalen oder als zusätzliches, separates Dämpfungselement ausgebildet sein.

Ferner kann in einer vorteilhaften Ausführungsform die erste Ventilschale und/oder die zweite Ventilschale als das Dämpfungsmittel zumindest ein die beiden Ventilschalen auseinander drückendes Zwangsmittel aufweisen. IDas Zwangsmittel führt vorteilhaft eine leichte, das heißt im elastischen Bereich angesiedelte Biegespannung in die Ventilschalen ein, so dass eine Schwingungsdämpfung verbessert wird. Insbesondere in Kombination mit der oben beschriebenen festen Verbindung in dem Gleitabschnitt des Ventilkörpers kann eine besonders günstige elastische Vorspannung der beiden Ventilschalen gegeneinander aufgebracht werden. Das Zwangsmittel kann an geeigneten und ausgewählten Stellen in dem nicht-fest-verbundenen oder losen Verschlussabschnitt ausgebildet sein, so dass durch Kontakt inklusive einer Vorspannung zwischen äußerer, erster und innerer, zweiter Ventilschale ein Zwang zwischen den beiden als vorzugsweise als Blechen ausgebildeten Ventilschalen aufgebracht, der dann bei schwingungsangeregter Relativbewegung beider Bleche zu Reibung und damit Dämpfung und Absorption führt. Hiermit wird es möglich, dem großen Anregungsspektrum im Bereich des Bauteils gerecht zu werden, indem durch die Wahl der Kontaktstellen besonders vorteilhaft kritische, angeregte Moden ausreichend gedämpft werden können.

In einer bevorzugten Weiterbildung der Strömungskanalvorrichtung kann die erste Ventilschale und/oder die zweite Ventilschale als das zumindest eine Zwangsmittel zumindest einen Abstandshalter aufweisen, wobei zumindest eine der beiden Ventilschalen elastisch in Richtung auf die andere der beiden Ventilschalen vorgespannt ist. Durch die elastische Vorspannung wird die Eigenfederung der Ventilschalen ausgenutzt, um das Reibdämpfungssystem des Ventilkörpers vorteilhaft zu erzeugen oder zu verstärken. Dadurch wird auf kostengünstige Weise ein eigengedämpfter Ventilkörper geschaffen.

Darüber hinaus kann in einer Weiterbildung der Strömungskanalvorrichtung vorteilhaft vorgesehen sein, dass das zumindest eine Zwangsmittel eine Reibkontaktstelle zwischen den beiden Ventilschalen aufweist. Insbesondere kann die Reibkontaktstelle in einem Meridianschnitt des Flugtriebwerks betrachtet an einer Stelle angeordnet sein, die zu einer optimalen Dämpfung einer zuvor rechnerisch oder experimentell bestimmten Schwingungsmode führt.

In einer weiteren vorteilhaften Weiterbildung der Strömungskanalvorrichtung können mehrere Zwangsmittel in einem Meridianschnitt des Flugtriebwerks betrachtet zwischen den beiden Ventilschalen angeordnet sein, wobei insbesondere jedes Zwangsmittel eine andere Schwingungsmode dämpft. Die Zwangsmittel können sich gemäß ihrer Position, ihrer Längserstreckung in Axialrichtung, Radialrichtung und Umfangsrichtung voneinander unterscheiden.

In einer darüberhinausgehenden Weiterbildung Strömungskanalvorrichtung ist vorgesehen, dass entsprechend der Anzahl der Zwangsmittel entlang der Längserstreckung des Verschlussabschnitts die Zwangsmittel in entsprechend auf die Längserstreckung des Verschlussabschnitts verteilt angeordneten Bereichen angeordnet sind. Das kann heißen, dass insbesondere die Bereiche eine Längserstreckung entlang der Längserstreckung des Verschlussabschnitts aufweisen, die zwischen 10% und 20% der Längserstreckung des Verschlussabschnitts beträgt, wobei dann ferner die Anzahl der Bereiche begrenzt ist, ohne dass sie sich überschneiden. Dies kann alternativ oder ergänzend heißen, dass insbesondere, wenn genau ein Zwangsmittel vorgesehen ist, dieses in einem in der Mitte der Längserstreckung des Verschlussabschnitts angeordneten Bereich liegt, oder wenn genau zwei Zwangsmittel vorgesehen sind, dass diese in entlang der Längserstreckung des Verschlussabschnitts bei einem Drittel und zwei Dritteln der Längserstreckung des Verschlussabschnitts angeordneten Bereichen liegen, oder wenn genau drei Zwangsmittel vorgesehen sind, dass diese in entlang der Längserstreckung des Verschlussabschnitts bei einem Viertel, zwei Vierteln und drei Vierteln der Längserstreckung des Verschlussabschnitts angeordneten Bereichen liegen. Die Abstände zwischen den Zwangsmitteln von drei oder mehr Zwangsmitteln können aber auch unterschiedlich zueinander sein. Es kann insbesondere vorgesehen sein, dass die Bereiche Reibbereiche der Zwangsmittel sind.

Ein zweiter Aspekt der Erfindung betrifft ein Flugtriebwerk mit einer wie oben beschriebenen Strömungskanalvorrichtung. Die Strömungskanalvorrichtung kann als ersten Zulaufkanal einen ersten Nebenstromkanal oder einen Zapfluftkanal aufweisen. Ferner kann der zweite Zulaufkanal ein zweiter Nebenstromkanal oder ein weiterer Zapfluftkanal mit einer anderen Zapfstelle in einem Verdichter des Flugtriebwerks sein. Der Abströmkanal kann ein Gesamtnebenstromkanal sein, es kann sich aber auch um eine Turbinenzapfluftzufuhr und/oder eine Zapfluftzufuhr für ein oder mehrere Kabinensysteme handeln.

Die Erfindung wird bezüglich der nachfolgenden Zeichnungen anhand einiger bevorzugter Ausführungsbeispiele der Erfindung näher erläutert.
- Fig. 1: zeigt ein Flugtriebwerk mit einem schematisch dargestellten Ausführungsbeispiel einer erfindungsgemäßen Strömungskanalvorrichtung
- Fig. 2: zeigt das Ausführungsbeispiel einer erfindungsgemäßen Strömungskanalvorrichtung in einem Meridianschnitt

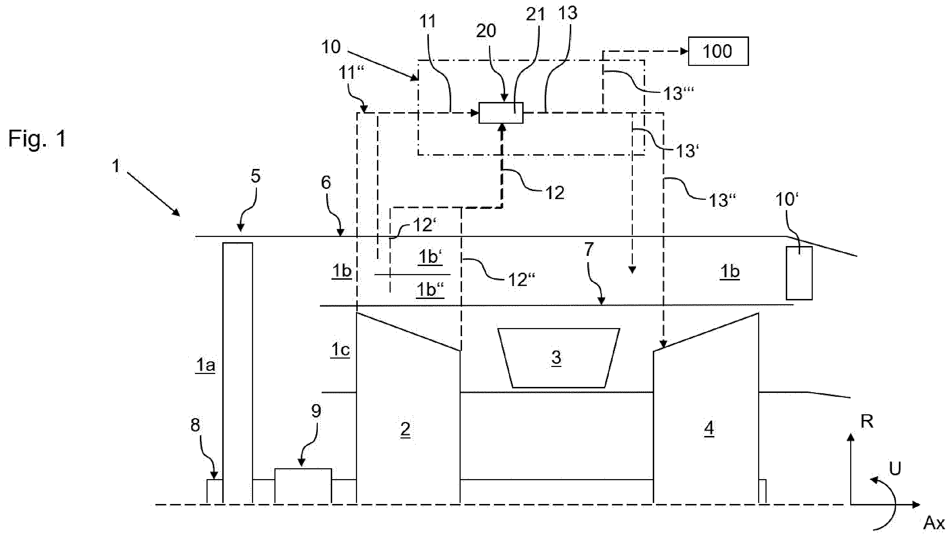

In Fig. 1 ist ein Flugtriebwerk 1 in einem Meridianschnitt schematisch dargestellt. Das Flugtriebwerk 1 weist einen Triebwerkseinlauf 1a auf, aus dem heraus stromabwärts ein Gesamtnebenstromkanal 1b und einen Kernstromkanal 1c angeströmt werden. Der Gesamtnebenstromkanal 1b kann in einen ersten Nebenstromkanal 1b' und einen zweiten Nebenstromkanal 1b" getrennt sein. Der Gesamtnebenstromkanal 1b dient der Schuberzeugung, der Kernstromkanal 1c dient hauptsächlich der Energieerzeugung für die Komponenten des Flugtriebwerks 1 und von Kabinensystemen 100 eines Flugzeugs. In dem Kernstromkanal 1c sind der Reihe nach die Hauptkomponenten des Flugtriebwerks 1 angeordnet, nämlich ein Verdichter 2, eine Brennkammer 3 und eine Turbine 4. Dabei kann die Luft aus dem zweiten Nebenstromkanal 1b" beispielsweise zuschaltbar in den Verdichter geleitet und dort verdichtet werden, um den Gesamtnebenstrom 1b an die entsprechende Flugmission anzupassen. Das Flugtriebwerk 1 weist ein den Triebwerkseinlauf 1a sowie den Gesamtnebenstromkanal 1b umgebendes Außengehäuse 6 und ein den Gesamtnebenstromkanal 1b und den Kernstromkanal 1c separierendes Zwischengehäuse 7 auf. In dem Triebwerkseinlass 1a kann ein Fan 5 mit einer oder mehrere Fanstufen zum Ansaugen und ersten Verdichten von Luft vorgesehen angeordnet sein. Der Fan 5, der Verdichter 2 sowie die Turbine 4 sind mittels zumindest einer um eine Triebwerksdrehachse 8a drehende Welle 8 mechanisch gekoppelt, wobei der Fan 5 und gegebenenfalls auch (nicht dargestellte) vordere Niederdruckverdichterstufen von der schneller laufenden Turbine 4 durch ein Getriebe 9 entkoppelt sein können. Ein Teil der von dem Fan angesaugten und verdichteten Luft strömt in den Kernstromkanal 1c, wo sie von dem Verdichter 2 stark verdichtet wird, um in der Brennkammer 3 mit Brennstoff vermischt und gezündet zu werden und schließlich in der Turbine 4 zum Antrieb der zumindest einen Welle 8 zu expandieren. Der Verdichter 2 stellt an Zapfluftstellen verdichtete Zapfluft für ein Zapfluftsystem bereit.

Das Flugtriebwerk 1 und dessen Komponenten werden in einem wellenfesten Zylinderkoordinatensystem umfassend eine Axialrichtung Ax, eine Radialrichtung R, und eine Umfangsrichtung U beschrieben.

In Fig. 1 ist ferner ein erstes Ausführungsbeispiel einer erfindungsgemäßen Strömungskanalvorrichtung 10 mit einer Mischvorrichtung 20 schematisch dargestellt. Die Strömungskanalvorrichtung 10 ist durch eine Strichpunktlinie gekennzeichnet. Mögliche Fluidverbindungen 11, 11', 11", 12, 12`, 12", 13, 13', 13", 13‴, die verschiedene Gasströme zu und von der Mischvorrichtung 20 leiten, sind gestrichelt dargestellt. Die Mischvorrichtung 20 weist einen ersten Zulaufkanal 11, einen zweiten Zulaufkanal 12, einen Abströmkanal 13 sowie einen Mischbereich 21 auf. Der erste Zulaufkanal 11 ist vorzugsweise ein erster Nebenstromzulaufkanal 11' eines ersten Nebenstromkanal 1b' oder ein Zapfluftkanal 11", der von dem Verdichter 2 mit Zapfluft einer ersten Zapfluftstelle versorgt wird. Der zweite Zulaufkanal 12 kann insbesondere der Gesamtnebenstromkanal 1b des Flugtriebwerks 1, der zweite Nebenstromkanal 1b oder ein zweiter Nebenstromzulaufkanal 12' aus dem zweiten Nebenstromkanal 1b", oder ein weiterer Zapfluftkanal 12" sein. Der Abströmkanal 13 kann der stromabwärtige Gesamtnebenstromkanal 1b, ein Nebenstromabströmkanal 12`, ein Turbinenabströmkanal 12" zur Versorgung der Turbine 4 mit Zapfluft oder ein Kabinenabströmkanal 12‴ zur Zapfluftzufuhr eines Kabinenssystems 100 sein. Diese Aufzählung der unterschiedlichen Kanalkombinationen und damit Mischanordnungen unterschiedlicher Gasströme sind konkrete Beispiele von Ausführungsformen der Erfindung. Die Aufzählungen sind nicht abschließend. Es versteht sich, dass auch noch weitere Mischanordnungen mit zwei Zulaufkanälen, einem Mischbereich und einem Abströmkanal möglich sind, die im Einzelnen hier nicht aufgeführt sind.

Das hier gezeigte Ausführungsbeispiel eines Flugtriebwerks zeigt eine weitere Strömungskanalvorrichtung 10' nach dem Gesamtnebenstromkanal 1b auf, die wie die oben beschriebene erfindungsgemäße Strömungskanalvorrichtung 10 aufgebaut sein kann. Diese optionale Strömungskanalvorrichtung 10' unterscheidet sich in der konkreten Ausgestaltung der beiden Zulaufkanäle und dem Abströmkanal, nicht aber in den erfindungswesentlichen Merkmalen.

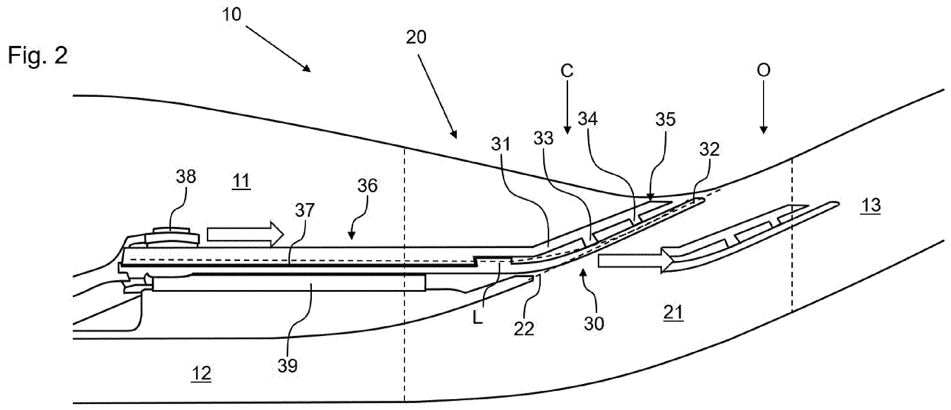

Fig. 2 zeigt das in Fig. 1 dargestellte Ausführungsbeispiel einer erfindungsgemäßen Strömungskanalvorrichtung 10 mit mehr Details.

Die Strömungsvorrichtung 10 umfasst die Mischvorrichtung 20 mit dem ersten Zulaufkanal 11, dem zweiten Zulaufkanal 12, dem Abströmkanal 13, und einem Mischbereich 21.

Die Mischvorrichtung trennt in einem geschlossenen Zustand C die beiden unterschiedlichen Gasströme aus den beiden Zulaufkanälen 11, 12 und mischt die beiden Gasströme in einem geöffneten Zustand O die beiden Gasströme. Die Mischvorrichtung 20 weist dazu einen in dem Mischbereich 21 beweglich angeordneten Ventilkörper 30 auf, der in eine entsprechende geschlossene Stellung und eine geöffnete Stellung verschoben werden kann. Die Verschiebung aus der geschlossenen Stellung in die geöffnete Stellung ist durch Pfeil gekennzeichnet, wobei der Ventilkörper 30 in der geschlossenen Stellung vollständig dargestellt und in der geöffneten Stellung lediglich ein Verschlussabschnitt 35 zur Verdeutlichung gezeigt ist.

Der Ventilkörper 30 besteht in dem vorliegenden Ausführungsbeispiel im Wesentlichen aus zwei Ventilschalen 31, 32, einer ersten, radial äußeren Ventilschale 31 und einer zweiten, radial inneren Ventilschale 32, die entlang einer Längserstreckung L des Ventilkörpers 30 aneinander angeordnet sind. Dabei liegen die Ventilschalen 31, 32 in dem Verschlussabschnitt 35, der in dem Mischbereich für die Trennung oder die Mischung der Gasströme sorgt, lediglich aneinander an und bilden durch die so auftretende Reibung zwischen den Ventilschalen 31, 32 das Reibdämpfungssystem des Ventilkörpers 30.

Die erste, radial äußere Ventilschale 31 und die zweite Ventilschale 32 sind in einem Gleitabschnitt 36 des Ventilkörpers 30 durch eine Ventilschalenanbindung 37 miteinander formschlüssig, insbesondere durch eine Bajonettverbindung, und/oder kraftschlüssig, insbesondere verschraubt, verklemmt oder verpresst, und/oder materialschlüssig, insbesondere verschweißt oder verlötet, miteinander fest verbunden. Ein durch einen nicht gezeigten Aktuator schwenkbarer Verstellhebel 38, der an dem Gleitabschnitt 36 angelenkt ist, sorgt für die Verschiebung des Ventilkörpers in Axialrichtung Ax. Der Gleitabschnitt 36 dient ferner dazu, die Verschiebung des Ventilkörper durch Gleiten auf einer möglichst ebenen Gleitvorrichtung 39, die in dem vorliegenden Ausführungsbeispiel aus in Umfangsrichtung U verteilt angeordneten Gleitblöcken besteht, möglichst reibungsarm zu ermöglichen.

Zwischen der ersten Ventilschale 31 und der zweiten Ventilschale 32 sind an der ersten Ventilschale 31 zwei als Dämpfungsmittel 33, 34 dienende Zwangsmittel 33, 34 vorgesehen, wobei die Zwangsmittel 33, 34 als Abstandshalter 33, 34 zwischen den beiden Ventilschalen angeordnet sind und diese in ihrem elastischen Verformungsbereich auseinander drücken und so gegeneinander vorspannen. Eine Alternative wäre eine Passfeder-Nut-Verbindung zwischen den beiden Ventilschalen 31, 32. Die Abstandshalter 33, 34 weisen ferner Reibkontaktstellen auf, die eine Reibung zwischen den beiden Ventilschalen erhöhen und so für eine bessere Dissipation der Schwingungen durch Reibung sorgen. Die beiden Reibkontaktstelle sind in dem dargestellten Meridianschnitt des Flugtriebwerks 1 betrachtet an einer jeweils einer Stelle angeordnet ist, die zu einer optimalen Dämpfung jeweils einer gesondert identifizierten Schwingungsmode führt.

Durch diesen mit Reibdämpfungssystem versehenen Ventilkörper 30 wird die Lebensdauer der Strömungskanalvorrichtung mit der Mischvorrichtung signifikant erhöht.

### Bezugszeichenliste

- 1: Flugtriebwerk
- 1a: Einlauf
- 1b: Gesamtnebenstromkanal
- 1b': erster Nebenstromkanal
- 1b": zweiter Nebenstromkanal
- 1c: Kernstromkanal
- 2: Verdichter
- 3: Brennkammer
- 4: Turbine
- 5: Fan
- 6: Außengehäuse
- 7: Zwischengehäuse
- 8: Welle
- 9: Getriebe

- 10: Strömungskanalvorrichtung
- 11: erster Zulaufkanal
- 11': erster Nebenstromzulaufkanal (erster Zulaufkanal)
- 11": erster Zapfluftkanal (erster Zulaufkanal)
- 12: zweiter Zulaufkanal
- 12`: zweiter Nebenstromzulaufkanal (zweiter Zulaufkanal)
- 12": weiterer Zapfluftkanal (zweiter Zulaufkanal)
- 13: Abströmkanal,
- 13': Nebenstromabströmkanal, Nebenstromkanal
- 13": Turbinenabströmkanal, Turbinenzapfluftzufuhr
- 13‴: Kabinenabströmkanal, Kabinensystem Zapfluftzufuhr

- 20: Mischvorrichtung
- 21: Mischbereich
- 22: Trennebene
- 30: Ventilkörper
- 31: erster Ventilschale
- 32: zweiter Ventilschale
- 33: Zwangsmittel, erster Abstandshalter
- 34: Zwangsmittel, zweiter Abstandshalter
- 35: Verschlussabschnitt
- 36: Gleitabschnitt
- 37: Ventilschalenanbindung
- 38: Verstellhebel
- 39: Gleitvorrichtung, Gleitblock

- 100: Kabinensysteme

- Ax: Axialrichtung
- R: Radialrichtung
- U: Umfangsrichtung

## Patentansprüche

1. Strömungskanalvorrichtung (10) eines Flugtriebwerks (1) zur Vereinigung zweier unterschiedlicher Gasströme, insbesondere eines Zapfluftstroms und eines Nebenkanalstroms, umfassend
eine Mischvorrichtung (20) mit
einem ersten Zulaufkanal (11), insbesondere wobei der erste Zulaufkanal (11) ein erster Nebenstromkanal 1b' oder ein Zapfluftkanal ist,
einem zweiten Zulaufkanal (12), insbesondere wobei der zweite Zulaufkanal (12) ein Nebenstromkanal (1b) des Flugtriebwerks (1) oder ein Nebenstromzulaufkanal (12') aus dem Nebenstromkanal (1b) oder ein weiterer Zapfluftkanal (12") ist,
einem Abströmkanal (13), und
einem Mischbereich (21),
wobei die Mischvorrichtung (20) in einem geschlossenen Zustand (C) die beiden unterschiedlichen Gasströme trennt und in einem geöffneten Zustand (O) die beiden Gasströme mischt,
wobei die Mischvorrichtung (20) einen in dem Mischbereich (21) beweglich angeordneten Ventilkörper (30) aufweist,
**dadurch gekennzeichnet,**
**dass** der Ventilkörper (30) ein Reibdämpfungssystem aufweist.

2. Strömungskanalvorrichtung nach Anspruch 1, **dadurch gekennzeichnet,**
**dass** der Ventilkörper (30) in einem Meridianschnitt des Flugtriebwerks (1) betrachtet entlang seiner Längserstreckung (L) zumindest aus einer ersten Ventilschale (31) und einer zweiten Ventilschale (32) gebildet ist, und
**dass** die erste Ventilschale (31) und die zweite Ventilschale (32) in einem in den Mischbereich (21) ragenden Verschlussabschnitt (35) des Ventilkörpers (30) aneinander anliegen.

3. Strömungskanalvorrichtung nach Anspruch 2, **dadurch gekennzeichnet,**
**dass** die erste Ventilschale (31) und die zweite Ventilschale (32) in einem Gleitabschnitt (36) des Ventilkörpers (30) miteinander formschlüssig und/oder kraftschlüssig und/oder materialschlüssig miteinander fest verbunden sind.

4. Strömungskanalvorrichtung nach einem der Ansprüche 2 oder 3, **dadurch gekennzeichnet,**
**dass** zwischen der ersten Ventilschale (31) und der zweiten Ventilschale (32) ein Dämpfungsmittel (33, 34) angeordnet ist.

5. Strömungskanalvorrichtung nach einem der Ansprüche 2 bis 4, **dadurch gekennzeichnet,**
**dass** die erste Ventilschale (31) und/oder die zweite Ventilschale (32) als das Dämpfungsmittel zumindest ein die beiden Ventilschalen (31, 32) auseinander drückendes Zwangsmittel (33, 34) aufweist.

6. Strömungskanalvorrichtung nach Anspruch 5, **dadurch gekennzeichnet,**
**dass** die erste Ventilschale (31) und/oder die zweite Ventilschale (32) als das zumindest eine Zwangsmittel (33, 34) zumindest einen Abstandshalter (33, 34) aufweist und wobei zumindest eine der beiden Ventilschalen (31, 32) elastisch in Richtung auf die andere der beiden Ventilschalen (31, 32) vorgespannt ist.

7. Strömungskanalvorrichtung nach einem der Ansprüche 5 oder 6, **dadurch gekennzeichnet,**
**dass** das zumindest eine Zwangsmittel (33, 34) eine Reibkontaktstelle zwischen den beiden Ventilschalen (31, 32) aufweist.

8. Strömungskanalvorrichtung nach einem der Ansprüche 5 bis 7, **dadurch gekennzeichnet,**
**dass** mehrere Zwangsmittel (33, 34) in einem Meridianschnitt des Flugtriebwerks betrachtet zwischen den beiden Ventilschalen (31, 32) angeordnet sind, wobei insbesondere jedes Zwangsmittel (33, 34) eine andere Schwingungsmode dämpft.

9. Strömungskanalvorrichtung nach einem der Ansprüche 5 bis 8, **dadurch gekennzeichnet,**
**dass** entsprechend der Anzahl der Zwangsmittel (33, 34) entlang der Längserstreckung des Verschlussabschnitts (35) die Zwangsmittel (33, 34) in entsprechend auf die Längserstreckung des Verschlussabschnitts (35) verteilt angeordneten Bereichen angeordnet sind.

10. Flugtriebwerk mit einer Strömungskanalvorrichtung nach einem der vorangehenden Ansprüche.
